Europäisches Patentamt

European Patent Office

Office européen des brevets

(11) Veröffentlichungsnummer: **0 169 584**

**A1**

(12) **EUROPÄISCHE PATENTANMELDUNG**

(21) Anmeldenummer: 85200471.2

(22) Anmeldetag: 07.02.85

(51) Int. Cl.⁴: **H 04 M 19/08**

(30) Priorität: 08.02.84 DE 3404335
09.08.84 DE 3429330

(43) Veröffentlichungstag der Anmeldung:
29.01.86 Patentblatt 86/5

(84) Benannte Vertragsstaaten:
IT

(71) Anmelder: Moses, Klaus M. Dipl.-Ing.
Talstrasse 10g
D-6000 Frankfurt am Main 56(DE)

(71) Anmelder: Lange, Heinz Dipl.-Ing (FH)
Buchenstrasse 6
D-6230 Frankfurt 80(DE)

(72) Erfinder: Moses, Klaus M. Dipl.-Ing.
Talstrasse 10g
D-6000 Frankfurt am Main 56(DE)

(72) Erfinder: Lange, Heinz Dipl.-Ing (FH)
Buchenstrasse 6
D-6230 Frankfurt 80(DE)

(74) Vertreter: Schickedanz, Willi
Langener Strasse 70
D-6050 Offenbach/Main(DE)

(54) Schaltungsanordnung zur elektrischen Speisung von Einrichtungen in einem Fernsprechapparat.

㊗ Die Erfindung betrifft eine Schaltungsanordnung zur elektrischen Speisung von Einrichtungen in einem Fernsprechapparat, mit der es möglich ist, die Einrichtungen mit der jeweils optimalen Leistung zu versorgen. Hierzu ist am Eingang des Fernsprechapparats ein Querglied (35) mit einer Gleichstromwiderstandscharakteristik vorgesehen, welches für alle Schleifenströme die maximal zulässige Eingangsspannung einstellt, so daß immer die maximal mögliche Leistung entnommen werden kann. Ein dem Querglied nachgeschaltetes Prioritätsnetzwerk (36) verteilt diese Leistung auf die einzelnen Verbraucher, wobei die von einem Verbraucher nicht benötigten Ströme zu einem Verbraucher mit der nächst niedrigeren Priorität weitergeleitet werden. Dabei versorgt ein Ausgang niederer Priorität mit inhärenter Strombegrenzung eine Lauthör- bzw. Freisprech- Endstufe (38, 39) derart, daß dieser Endstufe immer die maximal überschüssige Leistung zugeführt wird.

FIG.4

EP 0 169 584 A1

## SCHALTUNGSANORDNUNG ZUR ELEKTRISCHEN SPEISUNG VON EINRICHTUNGEN IN EINEM FERNSPRECHAPPARAT

<u>Technisches Gebiet der Erfindung</u>

Im Rahmen der Weiterentwicklung moderner Fernsprech-Endgeräte werden diese in zunehmendem Maße mit Zusatzeinrichtungen ausgerüstet, welche die Leistungsfähigkeit und den Bedienkomfort erhöhen. Dazu zählen z.B. durch Tastaturen gesteuerte Wahlgeber mit zugeordneten Speichern, Anzeigen zur Darstellung der gewählten Nummern und Apparatezustände, Lauthöreinrichtungen, Freisprecheinrichtungen, Gebührenerfassungseinrichtungen mit Umrechnungsmöglichkeiten in verschiedene Währungseinheiten und dergleichen. Aus Gründen der vereinfachten Anschlußtechnik, des Betriebsverhaltens während eines lokalen Netzausfalls sowie aus übertragungstechnischen Gründen, z.B. aus Gründen der Symmetrie und/oder des Blitzschutzes, ist es erstrebenswert, diese komplexen Geräte ausschließlich aus der Schleife zu speisen.

Für alle Endgeräte, welche innerhalb des Zuständigkeits-

-2-

0169584

bereiches eines Netzbetreibers, z.B. der Postverwaltung, als Haupt- oder Nebenstellen-Anschluß betrieben werden, sind die für die Energieversorgung des Gerätes maßgebenden Parameter genau festgelegt.

Im Bereich der Deutschen Bundespost sind dies üblicherweise der Gleichstromwiderstand des Apparates, der maximal 470 Ohm beträgt, und der Schleifenstrom, der minimal 20mA beträgt.

Diese Parameter wurden ursprünglich für den Betrieb von einfachen Telefonapparaten festgelegt, wobei der gesamte Schleifenstrom abzüglich des durch das Nachbild fließenden Stroms zum Betrieb des Mikrofons zur Verfügung stand.

Um die in modernen Fernsprech- Endgeräten vorhandenen Zusatzeinrichtungen mit Energie versorgen zu können, ist es notwendig, den Energiebedarf der Sprechkreisschaltung auf ein Minimum zu beschränken, um möglichst viel Energie zum Betrieb der Zusatzeinrichtungen, insbesondere Lauthör- und Freisprech-Empfangsverstärker, bereitzustellen.

Bei Anwendung einer konventionellen Sprechkreisschaltung mit Differentialübertrager wird dies hauptsächlich dadurch erzielt, daß das Nachbild durch einen zusätzlichen Trennkondensator gleichstromfrei gemacht wird und der Mikrofonstrom auf den minimal zulässigen Wert reduziert wird. Sprechkreisschaltungen mit Differentialübertrager haben jedoch den grundsätzlichen Nachteil, daß die Sendeenergie des Mikrofons nur zur Hälfte auf die Teilnehmer- Anschlußleitung gelangt, da die andere Hälfte durch das Nachbild verbraucht wird.

-3-

**0169584**

Eine Verbesserung läßt sich dann erzielen, wenn die gesamte Ausgangsleistung des Mikrofonverstärkers auf die Teilnehmeranschlußleitung gelangt. Um dies zu erreichen, werden Sprechkreisschaltungen nach dem Kompensationsprinzip vorgesehen. Hierbei wird das Ausgangssignal des Mikrofonverstärkers direkt in die Teilnehmeranschlußleitung eingespeist. An einem Summenpunkt des hochohmigen Empfangskreises wird ein vom Mikrofonverstärker abgezweigtes und am Nachbild gespiegeltes Signal gegenphasig überlagert, wodurch die Rückhördämpfung realisiert wird.

Stand der Technik

Es ist bereits eine Schaltungsanordnung für zentralgespeiste Teilnehmerstationen mit Sprechschaltungen, die eine Widerstandsbrücke enthalten, bekannt, bei der die Empfangsverstärkeranschaltung und die Lieferung einer Betriebsspannung für die Steuerung eines Zusatzgeräts mit einem geringstmöglichen Aufwand in der Teilnehmerschleife vorgenommen werden soll ( DE-PS 2159149, DE-PS 2159150 ). Mit dieser bekannten Schaltungsanordnung ist es möglich, beispielsweise zwei Zusatzgeräte anzuschließen und diese gegebenenfalls mit verschieden hohen Konstantströmen zu speisen. Nachteilig ist hierbei jedoch, daß die ausgekoppelte Leistung für die Zusatzeinrichtungen gering ist und keine Rangordnung bezüglich der Verteilung der Leistung auf die einzelnen Zusatzeinrichtungen realisierbar ist.

Es sind weiterhin Schaltungsanordnungen zur Stromspeisung einer integrierten Schaltung bekannt, die einen Multikollektor- Transistor aufweisen, mit dem es möglich ist, eine Vielzahl von gleichen oder verschiedenen Transistorstufen aus einer Trockenbatterie zu speisen ( DE-PS 2256640, DE-OS 2532397 ).

-4-

Diese Schaltungen haben den Nachteil, daß größere Ströme, wie sie z.B. für den Betrieb von Lauthör- und Freisprech-Endstufen erforderlich sind, nicht effizient verarbeitet werden können. Zweck dieser bekannten Schaltungen ist es, durch verzögertes Einschalten der Transistorstufen beim Einschalten der Betriebsspannungsquelle ein bestimmtes Schaltverhalten zu gewährleisten, doch können keine Energieversorgungsprioritäten nach dem Überlaufprinzip realisiert werden.

Bei einer weiteren bekannten Schaltungsanordnung für einen Fernsprecher ist ein Speiseglied zur Speisung mindestens eines Verstärkers vorgesehen, das aus einer an die beiden Adern der Teilnehmerleitung angeschlossenen Reihenschaltung eines Impedanzgliedes und eines spannungsbegrenzenden Elementes besteht ( CH-PS 592392 ). Bei dieser Schaltungsanordnung ist das Impedanzglied eine spulenlose, frequenzabhängig gegengekoppelte Transistorschaltung. Eine Energieversorgung von Zusatzgeräten nach Prioritäten ist auch mit dieser Schaltungsanordnung nicht möglich.

In einer anderen bekannten Telefonteilnehmerstation mit zwei Anschlußklemmen für die Teilnehmerleitung sind zwei mögliche Speiseschaltungen zum Speisen von Mikrofon und Verstärker vorgesehen ( CH-PS 593592, Fig. 6 u. 7 ). Diese Speiseschaltungen verwenden jedoch Zenerdioden zur Spannungsstabilisierung, so daß auch bei größeren Speiseströmen aus den Sprechadern nur eine relativ kleine Leistung für die Versorgung von Zusatzeinrichtungen, insbesondere der Lauthör-/Freisprech-Endstufe, auskoppelbar ist.

Aus der US-PS 4133983 ist eine Schaltungsanordnung

0169584

bekannt, die eine Brückenschaltung für die Verbindung
eines Mikrofons und eines Verstärkers an eine Telefonleitung verwendet, welche während des Betriebs eines
zugeordneten Tongenerators ( MFV Wahlzustand ) eine erhöhte Leitungsspannung vorsieht. Die Speisung eines
Tonwahlgenerators erfolgt hierbei elektronisch, wobei
ein Multikollektor-Transistor vorgesehen sein kann,
der mehrere Einrichtungen mit elektrischer Energie versorgt. Eine Energieversorgung nach Prioritäten ist indessen auch bei dieser Schaltungsanordnung nicht möglich.

Bei einer anderen bekannten Schaltungsanordnung zur
Leitungsspeisung von Teilschaltungen eines Fernsprechapparates wird eine Hör- und Sprechschaltung über einen
Stromkonstanthalter mit der Fernsprechleitung verbunden, wobei ein leitungsspannungsabhängig steuerbares
Querglied zwischen die Fernsprechleitung und den Stromkonstanthalter geschaltet ist ( DE-OS 2938082 ).
Dieses Querglied ist mit den Speiseanschlüssen von Zusatzschaltungen verbunden, wobei die Stabilisierung
der Spannung durch eine Zenerdiode erfolgt. Dies hat
jedoch den Nachteil, daß auch bei größeren Speiseströmen auf den Sprechadern nur die durch die Minimalspeisung vorgegebene relativ kleine Betriebsspannung
genutzt werden kann, wodurch die in der Lauthör-/
Freisprech-Endstufe erreichbare Niederfrequenz-Leistung
relativ klein ist.

Schließlich ist auch noch eine Schaltungsanordnung
zur Leitungsspeisung von Zusatzeinrichtungen eines
Fernsprechapparates vorgeschlagen worden, welche eine
Reaktanzstufe mit Konstantwiderstandscharakteristik
aufweist, wobei die Reaktanzstufe einen Transistor enthält, dessen Emitter über einen Widerstand mit der einen Sprechader und dessen Basis mit dem Mittelabgriff eines Spannungsteilers verbunden ist ( nicht vorveröffentlichte DE-OS 3347765 ). Mit dieser Schaltungsanordnung können indessen keine Stromversorgungsprioritäten eingestellt werden.

## Aufgabe

Der Erfindung liegt die Aufgabe zugrunde, eine Schaltungsanordnung für die Leistungsversorgung in einem Fernsprechapparat zu schaffen, welche die Nachteile der bekannten Schaltungsanordnungen nicht aufweist.

## Lösung

Diese vorstehende Aufgabe wird erfindungsgemäß dadurch gelöst, daß das Querglied der Schleife die jeweils maximal mögliche Leistung entnimmt und diese einer oder mehreren Einrichtungen optimal zuweist.

## Vorteilhafte Wirkungen der Erfindung

Mit der erfindungsgemäßen Schaltungsanordnung ist es möglich, im Rahmen der vom Netzbetreiber vorgegebenen Randbedingungen bei allen Schleifenströmen der Schleife die maximal mögliche Leistung zu entnehmen und diese auf die einzelnen Funktionseinheiten der Fernsprechteilnehmerschaltung optimal zu verteilen und optimal zu nutzen. Durch die Ausbildung des Querglieds als Rektanzstufe, welche für Gleichstrom eine einstellbare, ggf. nichtlineare, Widerstandscharakteristik darstellt, kann der Schleife bei allen Schleifenströmen immer die maximal mögliche Leistung entnommen werden. Für die Anwendung in Apparaten mit konventioneller Sprechkreisschaltung ( Gabelübertrager ) stellt das Querglied für Wechselstrom eine hohe Impedanz dar, wodurch nur eine geringe Einfügungsdämpfung verursacht wird.

Für die Anwendung in Apparaten mit elektronischen Sprechkreisschaltungen stellt das Querglied für Wechselstrom
die Apparateimpedanz dar. Das Querglied mit hoher Impedanz kann auch in Apparaten mit elektronischen
Sprechkreisschaltungen eingesetzt werden, wobei die
Eingangsimpedanz des Apparates durch Parallelschaltung
komplexer oder reeler Widerstände zum Querglied beliebig eingestellt werden kann.

Ein weiterer Vorteil des Quergliedes besteht darin,
daß das Querglied dazu benutzt werden kann, dem
Schleifenstrom die vom Mikrofonverstärker oder vom MFV-
Wahlgeber stammenden NF- Signale einzuprägen.
Dadurch wird die anderweitig notwendige Sendestufe und
der dafür notwendige Vorstrom (Mikrofonstrom) eingespart . Dieser Strom steht den Zusatzeinrichtungen
als weiterer Speisestrom zur Verfügung. Die dem Querglied nachgeschaltete Stromverteilungsschaltung bietet
die Möglichkeit, daß sich jeder daran angeschlossene
Verbraucher nur seine zum Betrieb notwendige Energie
entnimmt. Dadurch wird der Endstufe des Lauthör- oder
Freisprechempfangsverstärkers immer die maximal mögliche Energie zugeführt.

Weiterhin ist es durch die inhärente Strombegrenzung
der Ausgänge niederer Priorität möglich, einen großen
Pufferkondensator aufzuladen, aus dem die Lauthörendstufe während kurzzeitiger Dynamikspitzen mit zusätzlicher Energie versorgt wird, wodurch diese Dynamikspitzen verzerrungsfrei übertragen werden können.

Die als Querglied oder Reaktanzstufe bezeichnete Schaltungsanordnung kann in die Stromverteilerschaltung integriert werden. Es ist jedoch auch möglich, beide - das heißt Querglied und Stromverteilerschaltung – isoliert vorzusehen. Beide Lösungsprinzipien besitzen auch für sich alleine genommen erhebliche und für den Fachmann überraschende Vorteile, die sich bei gemeinsamer Anwendung natürlich noch verstärken.

Ausführungsbeispiele der Erfindung sind in der Zeichnung dargestellt und werden im folgenden näher beschrieben.

Beschreibung der Zeichnung

Es zeigen:

Fig. 1 ein vereinfachtes Blockschaltbild eines Fernsprechapparates mit einem Querglied (vergl. auch DE-OS 3347765, Fig.1);

Fig. 2 ein Querglied, das einen Transistor aufweist (vergl. auch DE-OS 3347765, Fig.2);

Fig. 3 ein Querglied, das zwei Transistoren aufweist (vergl. auch DE-OS 3347765, Fig.3);

Fig. 4 ein vereinfachtes Blockschaltbild eines erfindungsgemäßen Fernsprechapparates mit einem abgewandelten Querglied;

Fig. 5 eine erfindungsgemäße Schaltungsanordnung für eine Stromverteilerschaltung;

Fig. 6 ein Blockschaltbild eines elektronischen Sprechkreises nach dem Kompensationsprinzip bei einer Fernsprechteilnehmerstation in Verbindung mit einem Querglied;

Fig. 7 eine Detaildarstellung des in der Fig.6 gezeigten Querglieds;

Fig. 8 ein Querglied mit einem Regelverstärker;

Fig. 9 ein Diagramm, welches eine Eingangswiderstandscharakteristik darstellt;

Fig.10 eine Stromverteilerschaltung.

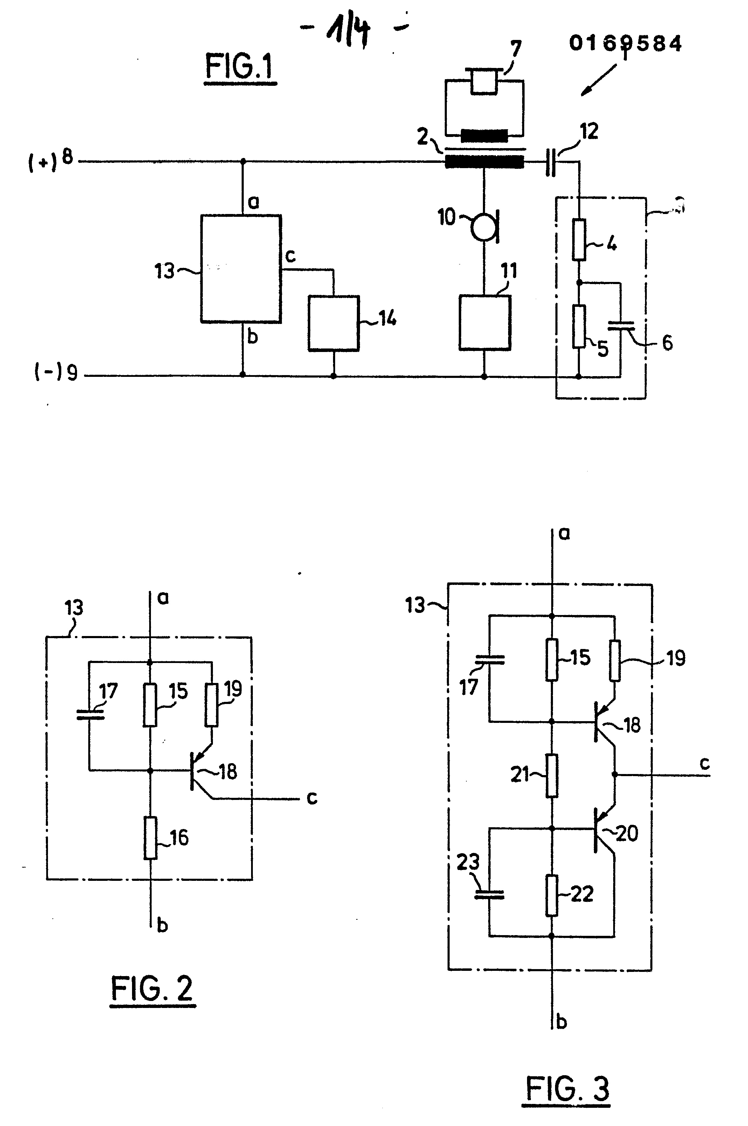

Bei dem in der Fig.1 gezeigten Blockschaltbild eines Fernsprechapparates sind nur diejenigen Einrichtungen gezeigt, welche zum Verständnis der Erfindung unbedingt notwendig sind. Einrichtungen zur polunabhängigen Anschaltung, zur Wahlkennzeichengabe, der Gabelumschalter usw., sind weggelassen.

Mit Hilfe eines Übertragers 2 wird eine Gabelschaltung 1 gebildet, an welche einerseits die Anschlußleitung und andererseits die Leitungsnachbildung 3 mit zwei Widerständen 4,5 und einem Kondensator 6 angeschlossen sind. Eine Hörkapsel 7 ist gleichstrommäßig abgetrennt von den Sprechadern 8,9. Ein Mikrofon 10 erhält einen Konstantstrom aus einer Konstantstromquelle 11, wobei der Strom auf den minimal zulässigen Wert des Mikrofons 10 begrenzt ist. Die Leitungsnachbildung 3 ist gleichstrommäßig von den Sprechadern 8,9 durch einen Kondensator 12 abgetrennt. Die Gabelschaltung 1 kann entweder mit Hilfe eines Übertragers 2 oder auch mit Hilfe von Halbleiterschaltungen gebildet sein. Zwischen den Sprechadern 8,9 ist vor der Gabelschaltung ein Querglied 13 in Form einer Reaktanzstufe angeschaltet, welche die Spannung zwischen a-b bei jedem Schleifenstrom innerhalb der zulässigen Grenzen hält und eine Zusatzeinrichtung, beispielsweise eine Lauthöreinrichtung 14, mit Speiseenergie versorgt. Es ist auch denkbar, mehrere Zusatzeinrichtungen an das Querglied 13 anzuschließen, das die Eingangsanschlüsse a,b und den Ausgangsanschluß c besitzt. Dabei sind der Eingangsanschluß a mit der positiven Sprechader 8 und der Eingangsanschluß b mit der negativen Sprechader 9 verbunden.

Eine einfache Schaltungsanordnung zur Verwirklichung einer Reaktanzstufe mit in Grenzen einstellbarer Gleichstromwiderstandscharakteristik ist in der Fig.2 gezeigt. Ein Transistor ist mit seinem Emitter über einen Widerstand 19 mit dem Anschluß a verbunden. Durch entsprechende Dimensionierung der Widerstände 15 und 16 sowie z.B. einer nicht dargestellten Zenerdiode, die zwischen dem unteren Anschluß des Widerstands 16 und dem Kollektor des Transistors 18 liegt, sind die Nullspannung und der differenzielle Widerstand der Gleichstromcharakteristik in Grenzen einstellbar. Durch einen Kondensator 17, der parallel zu dem Widerstand 15 geschaltet ist, wird eine sehr hohe Reaktanz für die Sprechwechselspannung erreicht; dies hat eine kleine Einfügungsdämpfung in den Sprechkreis zur Folge. In Abhängigkeit von dem in den Sprechadern 8,9 (Fig.1) fließenden Schleifenstrom liefert das Querglied 13 am Ausgang c einen entsprechenden Strom zur Versorgung der Zusatzeinrichtungen, z.B. der Lauthöreinrichtung 14:

In der Fig.3 ist eine Schaltungsanordnung gezeigt, die zur Stabilisierung der Betriebsspannung für den Verstärker der Lauthöreinrichtung 14 auf einen schleifenstromabhä-.ngigen Wert dient. Ein Transistor 20, dessen Emitter mit dem Kollektor des Transistors 18 verbunden ist, stellt eine Parallelstabilisierung der Betriebsspannung des Lauthörverstärkers am Ausgang c dar. Nimmt der Lauthörverstärker beispielsweise durch Übersteuerung einen zu hohen Strom auf, so sperrt der Transistor 20. Der Transistor 18 begrenzt den Strom auf den zulässigen Wert. Die Basen der beiden Transistoren 18,20 sind über einen Widerstand 21 miteinander verbunden. Parallel zur Basis-Kollektor-Strecke des Transistors 20 liegen ein Widerstand 22 und ein Kondensator 23. Der

Transistor 18 und auch der Transistor 20 können jeweils durch eine Darlingtonschaltung ersetzt werden, wobei im Falle des Transistors 18 die Einfügungsdämpfung des Querglieds 13 auf einen genügend kleinen Wert gebracht werden kann. Der Kondensator 23 entkoppelt die Betriebsspannung des Lauthörverstärkers vom Sprechkreis.

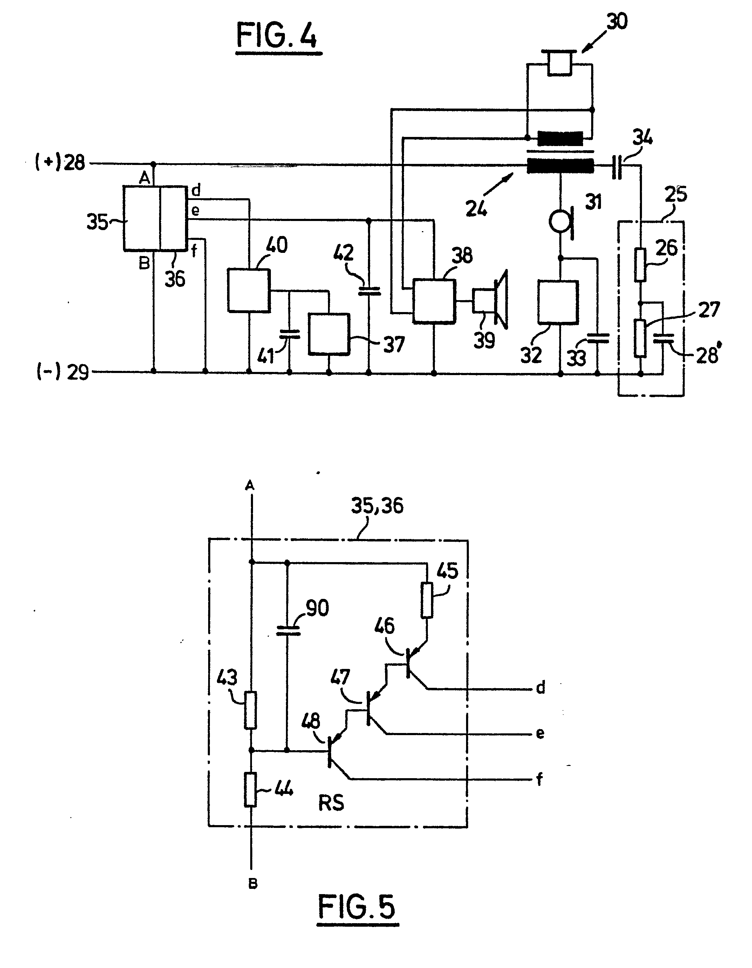

Bei dem in der Fig.4 gezeigten Blockschaltbild sind wiederum nur diejenigen Einrichtungen gezeigt, die zum Verständnis der Erfindung unbedingt notwendig sind. Mittels eines Übertragers 24 wird hierbei eine Gabelschaltung gebildet, an welcher einerseits die Anschlußleitung und andererseits die Leitungsnachbildung 25 angeschlossen sind. In der Leitungsnachbildung befinden sich zwei in Reihe geschaltete Widerstände 26,27, sowie ein Kondensator 28. Letzterer liegt parallel zum Widerstand 27. Gleichstrommäßig abgetrennt von den Sprechadern 28,29 der Anschlußleitung ist eine Hörkapsel 30. Ein Mikrofon 31 erhält einen Konstantstrom aus einer Konstantstromquelle 32, wobei der Strom auf den minimal zulässigen Mikrofonstrom begrenzt ist. Durch einen Kondensator 33 wird die hohe Impedanz der Konstantstromquelle 32 kompensiert, um die Einfügungsdämpfung der Konstantstromquelle 32 im Mikrofonkreis zu verringern. Die Leitungsnachbildung 25 ist gleichstrommäßig von den Sprechadern 28,29 durch einen Kondensator 12,34 abgetrennt, um den gesamten Schleifenstrom dem Mikrofon und den Zusatzeinrichtungen zur Verfügung zu stellen. Die Gabelschaltung kann entweder mit Hilfe des Übertragers oder durch entsprechende Halbleiterschaltungen, die Operationsverstärker aufweisen, gebildet sein. Zwischen die Sprechadern 28,29 ist vor der Gabelschaltung ein Querglied 35 in Form einer Reaktanzstufe geschaltet. Diese Reaktanzstufe liefert, wie weiter unten noch ausführlich beschrieben wird, an mehrere Verbraucher Speiseströme, wobei die Summe dieser Ströme gleich dem Schleifenstrom, abzüglich dem durch die Konstantstromquelle 32 für das Mikrofon 31 gelieferten Speisestrom, ist. Der in die Reaktanzstufe 35 fließende Strom wird durch eine Stromverteilungsschaltung 36 auf die Ausgänge d,e,f derselben aufgeteilt, wobei der am Ausgang d anliegende Strom zur Speisung einer Steuereinrichtung 37 und der am Ausgang e fließende Strom zur Speisung einer Lauthör- oder Freisprecheinrichtung 38 dient, an die ein Lautsprecher 39 angeschlossen ist. Bei dem Ausführungsbeispiel gemäß Fig.4 stellt die Einrichtung 38 einen Lauthörverstärker dar, dessen Eingänge parallel zur Hörkapsel 30 geschaltet sind. Der Ausgang f der Stromverteilungsschaltung 36 ist direkt mit der negativen Sprechader 29 verbunden. Die Stromverteilungsschaltung 36 der Reaktanzstufe 35 ist derart ausgebildet, daß am Ausgang d ein Speisestrom gezogen werden kann, welcher maximal dem in die Reaktanzstufe 35 fließenden Strom entspricht. In einem derartigen Fall kann an den Ausgängen e und f kein Strom mehr gezogen werden. Wird nun am Ausgang d ein niedrigerer Strom gezogen, so kann der übrige Strom aus dem Ausgang e gezogen werden, wobei wiederum der Ausgang f stromlos bleibt. Wird dagegen von den Ausgängen d und e kein Strom gezogen, so steht der gesamte in die Reaktanzstufe 35 am Eingang A hineinfließende Strom am Ausgang f zur Verfügung. Da die aus den Ausgängen d bis f fließenden Ströme in die Ader 29 zurückfließen, muß der in die Reaktanzstufe 35 fließende Strom der Schleifenstrom abzüglich dem durch die Konstantstromquelle 32 für das Mikrofon 31 gelieferte Strom sein. Hierdurch wird gewissermaßen ein Überlauf-

prinzip für Ströme realisiert.

Die Steuereinrichtung 37 kann beispielsweise als
Mikroprozessor ausgebildet sein und zur Erfassung der
Zustände der Bedienelemente des Fernsprechapparates,
zur Erzeugung von Anzeigeinformationen und zur Aussendung der Wahlinformation dienen. Sie wird nicht
nur während des Wahlvorgangs, sondern für die Dauer
der Benutzung des Fernsprechapparates benötigt.
Sie weist u.a. eine Abtasteinrichtung zur Erfassung
der Schaltzustände von Tasten (Wähltastatur, Erdtaste, Lauthörtaste usw.) auf. Die Steuereinrichtung
37 benötigt eine konstante Betriebsspannung, welche
durch einen Spannungsregler 40 aus der von der Stromverteilungsschaltung 35 angebotenen ungeregelten Spannung
her- und abgeleitet wird. Ein Kondensator 41, welcher
parallel zur Versorgungsspannung geschaltet ist,
dient als Stützkondensator. Auf diese Weise wird
während der Schleifenunterbrechung bei Impulswahl
und bei Gesprächsende die Steuereinrichtung 37
noch für eine bestimmte Zeit mit Energie versorgt.

Da die Steuereinrichtung 37 über den Spannungsregler
40 mit einer konstanten Spannung versorgt wird und
nur einen geringen Strom entnimmt, kann der übrige
Strom, welcher in die Reaktanzstufe 35 fließt, zur
Speisung für die Lauthöreinrichtung 38 verwendet werden. Die Stromverteilungsschaltung 36 der Reaktanzstufe 35 ist derart ausgelegt, daß ein Strombegrenzungseffekt bewirkt wird, da die Summe der an
Ausgängen d,e und f gezogenen Ströme den Wert des
in die Reaktanzstufe 35 am Eingang A fließenden
Stroms nicht überschreiten kann.

Weil der Ausgang d der Stromverteilungsschaltung 36 mit einem geringen Strom belastet ist, tritt dieser Strombegrenzungseffekt praktisch nur am Ausgang e auf.

Um die für die Endstufe der Lauthöreinrichtung ·38 zur Verfügung stehenden Energie optimal zu nutzen, ist es vorteilhaft, wegen des besseren Wirkungsgrades grundsätzlich lineare Klasse "B"- Endstufen oder auch digitale Klasse D-Endstufen einzusetzen. Beide haben die Charakteristik, daß die Stromaufnahme proportional zur Aussteuerung ist. Durch den Einsatz der oben beschriebenen Querglieder wird die Versorgungs-Spannung des Endverstärkers der Lauthöreinrichtung 38 mit größer werdendem Schleifenstrom ebenfalls erhöht. Damit erhöht sich außer der erhältlichen NF-Durchschnittsleistung auch der Aussteurungsbereich und die überbrückbare Dauer von kurzzeitigen Dynamikspitzen. Die zur Überbrückung dieser Dynamikspitzen notwendige Energie wird dabei aus einem Speicherkondensator 42 bezogen, welcher parallel zur Versorgungsspannung geschaltet ist.

In der folgenden Tabelle sind die erhältlichen NF-Durchschnitts- und Spitzenleistungen in Abhängigkeit vom Schleifenstrom zusammengestellt.

| | 20 | 30 | 40 | 50 | 60 |
|---|---|---|---|---|---|
| $I_s$ Schleifenstrom (mA) | 20 | 30 | 40 | 50 | 60 |
| $P_{NF\emptyset}$ NF-Durchschnittsleistung (mW) | 9,48 | 64 | 169 | 323 | 526 |
| Verbesserung relativ zu $P_{NF\emptyset}$ bei $I_s$ = 20mA | 1 | 6,75 | 17,82 | 34,07 | 55,48 |
| $P_{NF}$ Spitzenleistung (mW) | 62,5 | 144 | 336 | 608 | 960 |

Verbesserung relativ

zu $^P$NF Spitzenleistung

bei Is= 20 mA          1      2,3     5,3     9,7     15,3

Dynamik/db bezogen

auf $^P$NFØ bei Is= 20 mA 8,2   11,8   15,5    18      20

Dabei wird von einem Lautsprecherwiderstand von 50 Ohm
und einem Schleifenstromanteil von Mikrofon 31 und
Steuereinrichtung 37 von 14 mA sowie einer Gleichstromwiderstandscharakteristik des Querglieds von 470 Ohm
ausgegangen. Eine einfache Schaltungsanordnung zur Verwirklichung eines Querglieds, bestehend aus einer Reaktanzstufe 35 mit konstanter Gleichstromcharakteristik
und integrierter Stromverteilungsschaltung 36 ist in Fig.
5 gezeigt.

Die Schaltungsanordnung weist eine Widerstandscharakteristik auf, die durch Widerstände 43,44,45 eingestellt
werden kann. Als mögliche Werte kommen für die Widerstände 43,44 der Wert 5,6 kOhm und für den Widerstand 45
der Wert 100 Ohm in Betracht. Die Schaltungsanordnung
stellt im Grunde genommen eine Konstantstromquelle dar,
wobei der Spannungsabfall am Widerstand 44 die Basis-
Emitterspannung der Transistoren 46,47,48 und der Spannungsabfall am Widerstand 45 den Emitterstrom des Transistors 46 bestimmen. Der sich daraus ergebende Kollektorstrom $I_C=I_E-I_B$ ist zu jedem Zeitpunkt konstant. Ebenso
ist die Summe der an Ausgängen d,e und f auftretenden
Ströme konstant. Durch die in Fig. 5 gezeigte Hintereinanderschaltung der Transistoren 46 bis 48 entsteht die
prioritätsmäßige Zuordnung der Ströme zu den Ausgängen
d,e und f. Würden z.B. die Ausgänge d,e und f gegen den
Ausgang B der Reaktanzstufe 35 kurzgeschlossen, so würde
der gesamte Strom aus

dem Kollektor des Transistors 46 fließen, da dieser
Transistor an der ersten Stelle der Reihenschaltung
liegt. Dieser Strom entspricht dem Strom, welcher
am Eingang A in die Reaktanzstufe 35 hineinfließt,
wobei der Wert des Stroms am Ausgang d konstant
bleiben würde, obwohl die Kollektoren der Transistoren 47 und 48 kurzgeschlossen sind. Bleibt der
Ausgang d dagegen unbelastet, so gelten die beschriebenen Verhältnisse ebenso für die Ausgänge e
und f.

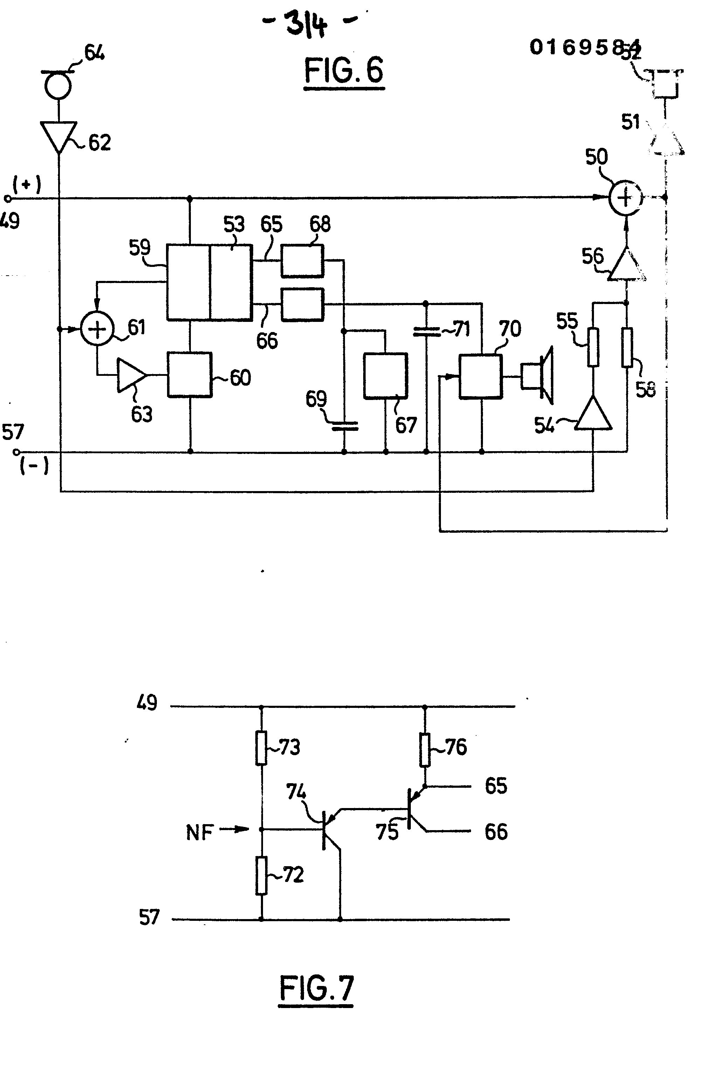

Das Prinzip der in der Fig. 5 gezeigten Schaltungsanordnung ist nicht auf das Ausführungsbeispiel beschränkt, bei dem von drei hintereinander geschaltteten Transistoren ausgegangen wird. Vielmehr sind
auch Spannungsverteilungsschaltungen mit mehr oder
weniger Ausgängen zur Speisung von Einrichtungen
möglich. Bei dem in Fig. 6 gezeigten Blockschaltbild einer Fernsprechteilnehmerstation sind wiederum
nur diejenigen Einrichtungen gezeigt, welche zum
Verständnis der Erfindung unbedingt notwendig sind.
Einrichtungen zur polunabhängigen Anschaltung, zur
Wahlkennzeichengabe, sowie der Gabelschalter sind
weggelassen.

An einer Sprechader 49 ist über eine Addierstufe
50 und einen Hörverstärker 51 eine Hörkapsel 52 angeschlossen. Die Rückhördämpfung erfolgt durch das
Kompensationsprinzip, und zwar dadurch, daß das von
einem Sprechverstärker 62 gelieferte Signal über
einen Trennverstärker 54 und einen Widerstand 55
einem Verstärker 56 zur Phasendrehung zugeführt
wird, wobei das auf die Sprechadern 49, 57 gelangte
Mikrofonsignal durch die Addierstufe 50

aufgehoben wird. Entspricht die Leitungsnachbildung 58 der Teilnehmeranschlußleitung, so findet eine vollständige Rückhördämpfung statt.

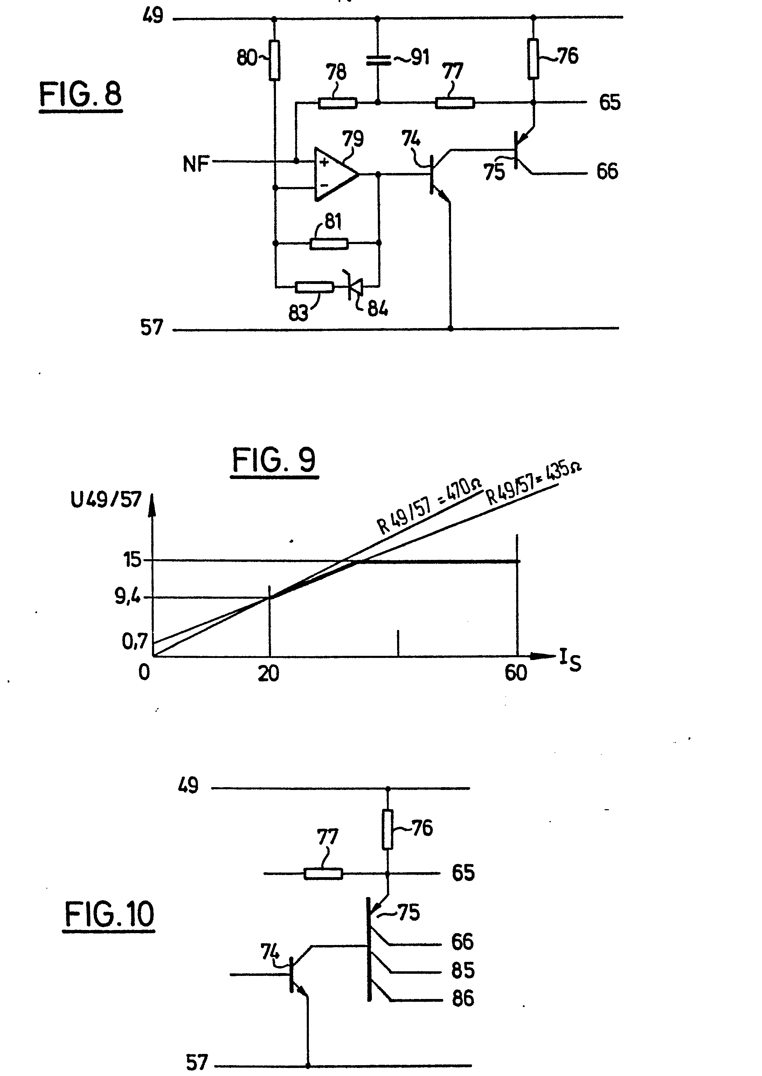

Zwischen den Sprechadern 49,57 ist ein Querglied vorgesehen, das durch eine Reihenschaltung eines Schleifenstromsensors 59 und eines Shunt-Reglers 60 gebildet ist. Der Schleifenstromsensor 59 liefert ein dem durch das Querglied fließenden Gleichstrom entsprechendes Signal an eine Addierstufe 61, welche über einen Regelverstärker 63 den Shunt-Regler 60 derart steuert, daß die geforderte Gleichstromwiderstandscharakteristik eingehalten wird. Die Modulation des Schleifenstroms erfolgt nun derart, daß dem vom Schleifenstromsensor 59 kommenden Signal in der Addierstufe 61 die vom Mikrofonverstärker 62 oder von einem nicht dargestellten MFV-Sender kommenden N F -Signale linear überlagert werden. Als Resultat wird die am Apparateeingang 49,57 anstehende Spannung gemäß den anstehenden NF-Signalen verändert. In der vorangegangenen Beschreibung wurde die Modulierbarkeit des Quergliedes noch nicht dargelegt. Mögliche Einspeisepunkte für die NF-Signale sind in der Fig.2 die Basis des Transistors 18, in der nachfolgend beschriebenen Fig.7 die Basis des Transistors 74 und in der Fig.8 der nichtinvertierende Eingang des Operationsverstärkers 79.

Am Schleifenstromsensor 59 ist eine Stromverteilungsschaltung 53 angeschlossen, die zwei Ausgänge 65 und 66 aufweist. Am Ausgang 65 ist beispielsweise eine Steuereinrichtung 67 angeschlossen, die etwa als Mikroprozessor ausgebildet sein kann. Sie dient zur Erfassung der Zustände der Bedienelemente der Fernsprechteilnehmerstation, zur Erzeugung von Anzeigeinformationen und zur Aussendung der Wahlinformationen und wird nicht nur während des Wahlvorgangs, sondern auch für die Dauer der Benutzung der Fernsprechteilnehmerstation benötigt. Sie weist u.a. eine Abtasteinrichtung zur Erfassung der Schaltzustände von Tasten (Wähltastatur, Erdtaste, Lauthörtaste usw.) auf. Die Steuereinrichtung 67 benötigt eine konstante Betriebsspannung, welche durch einen Spannungsregler 68 aus der von der Stromverteilungsschaltung 53 angebotenen ungeregelten Spannung konstant gehalten wird. Ein Kondensator 69, der parallel zur Versorgungsspannung geschaltet ist, dient als Stützkondensator. Auf diese Weise wird während der Schleifenunterbrechung bei Impulswahl und bei Gesprächsende die Steuereinrichtung 67 noch für eine bestimmte Zeit mit Energie versorgt.

Da die Steuereinrichtung 67 über den Spannungsregler 68 mit einer konstanten Spannung versorgt wird und nur einen geringen Strom aufnimmt, kann der übrige Strom, der am Ausgang der Stromverteilungsschaltung 53 fließt, z.B. zur Speisung einer Lauthör- oder Freisprecheinrichtung 70 verwendet werden.

Die bereits beschriebenen Vorteile, die sich durch die Aufteilung der Ströme nach Prioritäten ergeben, sind in gleichem Maße bei einer Anwendung auf Sprechkreise nach dem Kompensationsprinzip erzielbar. Durch den Wegfall des üblicherweise notwendigen Mikrofon- oder Modulatorvorstroms steht bei Sprechschaltungen gemäß Fig.6 dieser eingesparte Strom für Speisezwecke zur Verfügung. Er kann genützt werden, um weitere Zusatzeinrichtungen zu versorgen oder um die erzielbare NF-Ausgangsleistung des Lauthör- oder Freisprechverstärkers weiter zu erhöhen.

Die Stromverteilungsschaltung 53 ist derart ausgelegt, daß sie einen Strombegrenzungseffekt bewirkt, da die Summe der an den Ausgängen 65 und 66 gezogenen Ströme den Wert des durch das Querglied fließenden Stroms nicht überschreiten kann. Da der Ausgang 65 der Stromverteilungsschaltung 53 mit einem geringen Strom belastet ist, tritt dieser Strombegrenzungseffekt praktisch nur am Ausgang 66 auf.

Um die für die Endstufe der Lauthöreinrichtung 70 zur Verfügung stehende Energie optimal zu nutzen, ist es vorteilhaft, wegen des besseren Wirkungsgrades grundsätzlich Klasse "B"-Endstufen einzusetzen. Diese haben die Charakteristik, daß die Stromaufnahme proportional zur Aussteuerung ist.

Durch die besondere Ausbildung des Querglieds wird die Versorgungsspannung des Endverstärkers der Lauthöreinrichtung 70 mit größer werdendem Schleifenstrom ebenfalls erhöht. Damit erhöht sich außer der erhältlichen NF-Durchschnittsleistung auch der Aussteuerungsbereich und die überbrückbare Dauer von kurzzeitigen Dynamikspitzen. Die zur Überbrückung dieser Dynamikspitzen notwendige Energie wird dabei aus einem Speicherkondensator 71 bezogen, der parallel zur Versorgungsspannung geschaltet ist.

Wie sich aus der Fig.7 ergibt, wird über den Spannungsteiler 72/73 ein Transistor 74 in den leitenden Zustand gesteuert. Der im Emitterkreis eines Transistors 75 liegende Widerstand 76 erfüllt die Funktion des Schleifenstromsensors. Der an ihm entstehende Spannungsabfall ist proportional dem Schleifenstrom und wirkt als Gleichstromgegenkopplung im Ansteuerkreis des Transistors 74.

Durch entsprechende Dimensionierung der Widerstände 72,73 und 76 kann die Gleichstromcharakteristik (Spannung zwischen den beiden Sprechadern 49/57 als Funktion des Schleifenstroms) in Grenzen verändert werden.

Im folgenden wird die Gleichstromcharakteristik $U_{A/B} = f(I_s)$ bzw. $U_{49/57}$ annähernd berechnet, und zwar für den Fall, daß an den Punkten 49/57, 65 und 66 keine Ströme entnommen werden. Zur Erläuterung sei noch erwähnt, daß in der Fig.7 der Verbindungspunkt zwischen dem Widerstand 73 und der Leitung 49 dem Anschluß A entspricht, während der Verbindungspunkt zwischen dem Widerstand 72 und der Leitung 57 dem Anschluß B entspricht. Parallel zum Widerstand 73 kann dabei noch ein nicht dargestellter Kondensator vorgesehen sein. Der Anschlußpunkt zwischen dem Emitter des Transistors 75 und dem Widerstand 76 kann als d bezeichnet werden, während der Anschluß des Kollektors der Transistors 75 als e bezeichnet werden kann. Unter diesen Voraussetzungen gilt

$$U_{A/B} = U_{49/57} = I_s \times R_{76} + U_{BE75} + U_{BE74} + (I_B + I_Q) \times R_{72}$$

Hierbei ist

$U_{BE74}$ = die Basis-Emitter-Spannung des Transistors 74

$U_{BE75}$ = die Basis-Emitter-Spannung des Transistors 75

$I_B$ = der Basisstrom des Transistors 74

$I_Q$ = der Querstrom im Spannungsteiler $R_{72}/R_{73}$

$U_{BE74}$ und $U_{BE75}$ werden stromunabhängig zusammen mit 1,4 Volt angenommen.

$$U_{A/B} = I_s \times R_{76} + 1,4\ V + (I_B + I_Q) \times R_{72}$$

$$I_Q = \frac{I_s \times R_{76} + 1,4\ V}{R_{73}}$$

dabei ist $I_B = \dfrac{I_s}{B}$

und B der Stromverstärkungsfaktor des Transistors 74. Daraus ergibt sich

$$U_{A/B} = U_{49/57} = I_s \times R_{76} + 1,4V + \left[ \frac{I_s}{B} + \frac{I_s \times R_{76} + 1,4V}{R_{73}} \right] \times R_{72}$$

$$U_{A/B} = 1,4V \left(1 + \frac{R_{72}}{R_{73}}\right) + I_s \times R_{76} \left(1 + \frac{R_{72}}{R_{73}}\right) + \frac{I_s}{B} \times R_{72}$$

Diese Gleichung wird dargestellt durch

$$U_{A/B} = U_O + I_s \times R_{A/B} \qquad :$$

wobei $U_O = 1,4V \left(1 + \dfrac{R_{72}}{R_{73}}\right)$ die Spannung $U_{A/B}$ bei $I_s = 0$ darstellt und

$$I_s \times R_{A/B} = I_s \times R_{76} \left(1 + \frac{R_{72}}{R_{73}}\right) + \frac{I_s}{B} \times R_{72}$$

den Spannungsabfall zum differentiellen Gleichstromwiderstand darstellt.

Bei der in der Fig.7 gezeigten Schaltung wird der Transistor 74 immer im aktiven und der Transistor 75 immer
im gesättigten Zustand betrieben. Die Ausgangsspannungen
an den Punkten 65 bzw. d und 66 bzw. e sind nahezu dem
an der Ader 49 bzw. A anliegenden Spannungswert gleich.

Wird der Schaltung an den Ausgängen 65 bzw. d und/oder
66 bzw. e Strom entnommen, so bleibt bei gegebenem
Schleifenstrom der Spannungsabfall am Widerstand 76
kυnstant, jedoch vermindert sich der Basisstrom im Transistor 74. Damit verringert sich auch der Spannungsabfall am Widerstand 72, mit dem Resultat, daß die
Spannung zwischen den Sprechadern mit steigender Belastung an den Punkten 65 und 66 kleiner wird. Es ist ersichtlich, daß zur Kompensation dieses Effekts ein relativ hoher Strom durch das Querglied erforderlich ist.

Während die in der Fig.7 gezeigte Schaltungsanordnung einen annähernd konstanten Gleichstromeingangswiderstand aufweist, ist es mit Hilfe der in der Fig.8 gezeigten Schaltungsanordnung möglich, das Gleichstromverhalten der Schaltung ggf. durch nichtlineare Gegenkopplungszweige abschnittsweise einzustellen. Der Schleifenstromsensor in Form des Widerstandes 76, die Stromverteilungsschaltung in Form des Transistors 75 und der Shunt-Regler in Form des Transistors 74 sind ebenso angeordnet wie in der Fig.7, wobei zu bemerken ist, daß der Transistor 74 sowohl als NPN- oder auch als PNP-Transistor ausgebildet sein kann. Das Signal vom Widerstand 76 gelangt über die Widerstände 77 und 78 zum nicht invertierenden Eingang des Regelverstärkers 79, welcher als Operationsverstärker ausgebildet ist. Der Ausgang des Regelverstärkers 79 ist mit der Basis des als Shunt-Regler wirkenden Transistors 74 verbunden. Der Verstärkungsfaktor des Regelverstärkers 79 wird in bekannter Weise durch das Verhältnis der Widerstände 80 und 81 eingestellt. Der Widerstand 78 hat die Aufgabe, den Eingangswiderstand des Regelverstärkers 79 festzulegen, während der Widerstand 77 zusammen mit einem Kondensator 91 einen Tiefpaß bildet.

Nachfolgend wird das Verhalten der in der Fig.8 dargestellten Schaltung mathematisch formuliert, und zwar unter der Annahme, daß die Zenerdiode 84 nichtleitend ist. Der Widerstand $R_{76}$ stellt den Schleifenstromsensor dar. Der an ihm auftretende Spannungsabfall ist

$$U_{R76} = I_s \times R_{76}$$

Der Verstärkungsfaktor des Operationsverstärkers 79
wird durch die Widerstände 80 und 81 eingestellt:

$$A = \frac{R_{81}}{R_{80}}$$

Somit ist die Ausgangsspannung am Ausgang des Operationsverstärkers 79

$$U_{79} = A \times U_{R76} = \frac{R_{81}}{R_{80}} \times I_s \times R_{76}$$

Diese Spannung verursacht am Emitter des Transistors 74
eine Spannung, die etwa 0,7V unterhalb der Ausgangsspannung des Operationsverstärkers 79 liegt. Somit ist
die zwischen 49 und 57 anliegende Spannung

$$U_{49/57} = 0,7\ V + I_s \times \frac{R_{81} \times R_{76}}{R_{80}}$$

Es ist ersichtlich, daß entsprechend der Ableitung für
Fig.7

$$U_o = 0,7\ V$$

und

$$I_s \times R_{A/B} = I_s \times \frac{R_{81} \times R_{76}}{R_{80}}$$

Somit ist der differentielle Widerstand

$$R_{A/B} = \frac{R_{81} \times R_{76}}{R_{80}}$$

Parallel zum Widerstand 81 ist eine Reihenschaltung,
bestehend aus einem Widerstand 83 und einer Zenerdiode
84 geschaltet. Mit dieser Maßnahme läßt sich die Gleichstromwiderstandscharakteristik des Querglieds abschnittsweise unterschiedlich einstellen, um beispielsweise die
an den Ausgängen 65 bzw.d und 66 bzw.e angeschlossenen
Verbraucher nicht spannungsmäßig zu überlasten. Wird der
Schleifenstrom so groß, daß die Ausgangsspannung des Operationsverstärkers die Zenerspannung übersteigt, so stellt sich ein kleinerer Verstärkungsfaktor ein, wodurch sich der differentielle Widerstand entsprechend verkleinert. Auf eine mathematische Behandlung dieses Zustandes wird verzichtet. Wird beispielsweise eine Reihenschaltung, bestehend aus einer Zenerdiode mit einer Durchbruchspannung von 15 V und einem Serienwiderstand von 0 Ohm eingesetzt, so steigt die Spannung an den Ausgängen 65 bzw. d und 66 bzw. e mit größer werdendem Schleifenstrom bis zu einem Wert von 15 V, um dann bei noch größer werdendem Schleifenstrom diesen Wert nicht mehr zu überschreiten. Hierbei liegt der Wert des Widerstands 83 bei 0 Ohm. Durch die Wahl eines entsprechenden Wertes des Widerstands 83 läßt sich der in der Fig.9 gezeigte waagrechte Teil steigend verändern.

Für den Fall, daß mehr als zwei Verbraucher oder Verbrauchergruppen an die Stromverteilungsschaltung angeschlossen werden sollen, ist es möglich, durch eine Kaskadenschaltung einer entsprechenden Zahl von Transistoren 75 die entsprechenden Ausgänge zu schaffen (vergl. Fig.5). Dabei entspricht die Summe der an den Ausgängen d,e und f maximal entnehmbaren Strömen dem in die Schaltung hineinfließenden Strom. Die in der Fig.5 gezeigte Erweiterungsmöglichkeit der Verteilerschaltung um weitere priorisierte Ausgänge ist auf die in der Fig.8 gezeigte Schaltung entsprechend anwendbar. In dieser Fig.8 könnte der Ausgang 65 mit d, der Ausgang 66 mit e und der Emitter des Transistors 74 mit f bezeichnet werden. Die Anschlüsse 49 und 57 entsprechen den Anschlüssen A bzw. B.

Anstelle der Kaskadenschaltung kann auch ein Transistor 75 eingesetzt werden, der als Multikollektor-Transistor ausgebildet ist und eine der Anzahl der Verbraucher entsprechende Anzahl von Kollektoren aufweist. Dieser Multikollektor- Transistor muß eine innere Struktur aufweisen, die eine Leistungsversorgung nach Prioritäten zuläßt.

Andere elektronische Schaltmittel, mit denen eine prioritätsmäßige Leistungszuführung realisierbar ist, sind ebenfalls denkbar. So könnten beispielsweise die Zusatzgeräte mit einprogrammierten Prioritäten versehen werden, die über Steuerelektroden von Thyristoren oder dergleichen die ihnen zustehende Leistung abrufen.

Bei den in den Figuren lediglich als Blöcke dargestellten Schaltungsanordnungen handelt es sich um an sich bekannte Einrichtungen, so daß sich eine nähere Darstellung erübrigt. Beispielsweise kann die Konstantstromquelle 11 in Fig. 1 dadurch realisiert werden, daß die Basis eines Transistors mit der Anode einer Zenerdiode verbunden ist, deren Kathode über einen Widerstand sowohl an dem Emitter dieses Transistors, als auch über einen Kondensator am Kollektor dieses Transistors liegt. Das Mikrofon ist bei einer solchen Schaltung mit seinem einem Anschluß mit dem Kollektor des Transistors und mit dem anderen Anschluß über einen Widerstand und der Basis dieses Transistors verbunden.

Patentansprüche

1. Schaltungsanordnung zur elektrischen Speisung von Einrichtungen in einer Fernsprechteilnehmerschaltung mit einem zwischen den Fernsprechleitungen vorgesehenen Querglied, das mittelbar oder unmittelbar mit den Einrichtungen verbindbar ist, dadurch gekennzeichnet, daß das Querglied ( 13; 35, 36; 59, 53, 60 ) der Schleife ( 49, 57; 28, 29 ) die jeweils maximal mögliche Leistung entnimmt und diese einer oder mehreren Einrichtungen ( 14; 40; 37; 67, 70 ) optimal zuweist.

2. Schaltungsanordnung nach Anspruch 1, dadurch gekennzeichnet, daß das Querglied ( 13; 35, 36; 59, 60, 53 ) eine Reaktanzstufe mit konstanter Gleichstromwiderstandscharakteristik ist.

3. Schaltungsanordnung nach Anspruch 1, dadurch gekennzeichnet, daß die Zuführung der Leistung an die Einrichtungen ( 14; 40; 37, 38; 67, 70 ) nach Prioritäten erfolgt.

4. Schaltungsanordnung nach einem oder nach mehreren der vorangegangenen Ansprüche, dadurch gekennzeichnet, daß das Querglied ( 13; 35, 36; 59, 53 ) für Gleichstrom einen einstellbaren konstanten Widerstand darstellt.

5. Schaltungsanordnung nach einem oder nach mehreren der vorangegangenen Ansprüche, dadurch gekennzeichnet, daß das Querglied ( 13; 35, 36; 59, 53 ) für Wechselstrom eine hohe Impedanz darstellt.

6. Schaltungsanordnung nch einem oder nach mehreren der vorangegangenen Ansprüche, dadurch gekennzeichnet, daß das Querglied ( 13; 35, 36; 59, 53 , 60 ) durch ein NF-Signal, z.B. Ausgangssignal des Mikrofonverstärkers ( 62 ) steuerbar ist.

7. Schaltungsanordnung nach Anspruch 6, dadurch gekennzeichnet, daß das vom Mikrofon ( 10, 31, 64 ) oder MFV-Wahlgeber stammende NF-Signal dem Schleifenstrom der Teilnehmerschaltung aufmoduliert ist.

8. Schaltungsanordnung nach Anspruch 7, dadurch gekennzeichnet, daß während der negativen Halbwellen des NF-Signals der Schleifenstrom an den mit Versorgungsausgängen verbundenen Stützkondensatoren ( 69, 71 ) vorbeigeführt wird, um nichtlineare Verzerrungen des NF-Signals auf der Leitung zu verhindern.

9. Schaltungsanordnung nach einem oder nach mehreren der vorangegangenen Ansprüche, dadurch gekennzeichnet, daß der Schleifenstrom derart prioritätsmäßig Einrichtungen ( 14; 40; 37, 38; 67, 70 ) zugeführt wird, daß Einrichtungen mit höherer Priorität stets zuerst versorgt werden.

10. Schaltungsanordnung nach einem oder nach mehreren der vorangegangenen Ansprüche, dadurch gekennzeichnet, daß den Einrichtungen ( 14; 40; 37, 38; 67, 70 ) mit niederer Priorität ein maximaler Strom

$$I_{nmax} = I_s - \sum_1^{n-1} I_n$$

zugeführt wird, wobei

$I_s$ = verfügbarer Schleifenstrom

$I_{nmax}$ = Strom der Zusatzeinrichtung mit n-ter Priorität.

11. Schaltungsanordnung nach einem oder nach mehreren der vorangegangenen Ansprüche, dadurch gekennzeichnet, daß eine Stromverteilerschaltung ( 36, 53 ) vorgesehen ist, von deren Ausgang mit niedrigster Priorität der nicht benötigte Schleifenstrom abgeleitet wird.

12. Schaltungsanordnung nach einem oder nach mehreren der vorangegangenen Ansprüche, dadurch gekennzeichnet, daß die Ausgänge ( e,f ) niederer Priorität der Stromverteilerschaltung ( 36, 53 ) kurzschließbar sind, ohne daß hierdurch die Eingangscharakteristik beeinflußt wird und ohne daß die an den Ausgängen (d) höherer Priorität abfließenden Ströme verändert werden.

13. Schaltungsanordnung nach einem oder nach mehreren der vorangegangenen Ansprüche, dadurch gekennzeichnet, daß die Stromverteilerschaltung ( 36, 53 ) an ihren Ausgängen ( d, e, f ) Spannungen abgibt, die so nahe wie möglich an der vom Querglied ( 13; 35, 36; 59, 53 ) eingestellten Spannung liegen.

14. Schaltungsanordnung nach einem oder nach mehreren der vorangegangenen Ansprüche, dadurch gekennzeichnet, daß Zusatzeinrichtungen, welche keine Unterbrechung der Stromversorgung tolerieren können ( z. B. Wahlprozessoren ) an die Ausgänge ( d ) höherer Priorität der Stromverteilerschaltung ( 36, 53 ) angeschlossen sind.

15. Schaltungsanordnung nach einem oder nach mehreren der vorangegangenen Ansprüche, dadurch gekennzeichnet, daß Zusatzeinrichtungen, welche in Abhängigkeit vom Betriebszustand sehr hohe Ströme aufnehmen können, z. B. die Endstufe des Lauthörverstärkers, an einen
strombegrenzenden Ausgang niederer Priorität angeschlossen sind.


16. Schaltungsanordnung nach einem oder nach mehreren
der vorangegangenen Ansprüche, dadurch gekennzeichnet,
daß jede Einrichtung mit höherer Priorität mit jeweils
ihrem Sollwert an Spannung oder Strom versorgt wird,
bevor eine Einrichtung mit der nächst niedrigeren
Priorität Spannung oder Strom erhält.


17. Schaltungsanordnung nach einem oder nach mehreren der
vorangegangenen Ansprüche, dadurch gekennzeichnet,
daß ein den Speisestrom des Mikrofons der Sprechschaltung
( 31 ) des Fernsprechapparates begrenzender Stromkonstanthalter vorgesehen ist.


18. Schaltungsanordnung nach einem oder nach mehreren
der vorangegangenen Ansprüche, dadurch gekennzeichnet,
daß der gesamte von der Verteilerschaltung ( 36 )
zu verteilende Strom gleich dem Schleifenstrom minus
dem der Hör- und Sprechschaltung zugeführten Strom
ist.


19. Schaltungsanordnung nach einem oder nach mehreren
der vorangegangenen Ansprüche, dadurch gekennzeichnet,
daß eine gleichstrommäßig  von den Sprechadern ( 8, 9;
28, 29; 49, 57 ) abgetrennte Leitungsnachbildung ( 3, 25 )
vorgesehen ist.


20. Schaltungsanordnung nach einem oder nach mehreren
der vorangegangenen Ansprüche, dadurch gekennzeichnet,
daß das Querglied ( 35 ) für Speisung von Einrichtungen
( 40, 37, 38 ) mehrerer Prioritätsklassen einen Spannungteiler aufweist, der aus zwei hintereinandergeschalteten Widerständen ( 43, 44 ) besteht, daß
zwischen dem Mittenabgriff des Spannungsteilers und dem
einen Anschluß ( A ) des Querglieds ( 35 ) ein Kondensator ( 90 ) geschaltet ist, wobei dieser Anschluß ( A )
über einen dritten Widerstand ( 45 ) und den Emitter
eines ersten Transistors ( 46 ) verbunden ist, daß die
Basis dieses Transistors ( 46 ) mit dem Emitter eines
zweiten Transistors ( 46 ) verbunden ist, daß die Basis
dieses zweiten Transistors ( 46 ) mit dem Emitter eines
dritten Transistors ( 48 ) verbunden ist und daß die
Basis dieses dritten Transistors ( 48 ) mit dem Mittenabgriff des Spannungsteilers verbunden ist, wobei an
den Kollektoren der Transistoren ( 46, 47, 48 ) die
Ströme zur Speisung der ⌐usatzeinrichtungen abgenommen
werden.

21. Schaltungsanordnung nach Anspruch 20, dadurch gekennzeichnet, daß der Kollektor des dritten Transistors
( 48 ) mit dem Ausgang ( B ) des Querglieds ( 36 ) verbunden ist.

22. Schaltungsanordnung nach einem oder mehreren der
vorangegangenen Ansprüche, dadurch gekennzeichnet,
daß als Zusatzeinrichtung ein Lauthör- und/oder
Freisprechverstärker ( 38 ) vorgesehen ist, dessen
Endstufe als Klasse "B"- Endstufe oder Klasse "D"-
Endstufe ausgebildet ist.

23. Schaltungsanordnung nach Anspruch 22, dadurch
gekennzeichnet, daß parallel zu den Speiseanschlüssen
des Lauthör- und/oder Freisprechverstärker ( 38 )
ein Speicherkondensator ( 42 ) geschaltet ist.

24. Schaltungsanordnung nach einem oder mehreren der vorangegangenen Ansprüche, dadurch gekennzeichnet,
daß die Verteilerschaltung ( 36 ) eine Stromverteilerschaltung ist und die Spannungen der Speiseströme
ungeregelt sind.

25. Schaltungsanordnung nach einem oder nach mehreren
der vorangegangenen Ansprüche, dadurch gekennzeichnet,
daß die Spannungen der Speiseströme geregelt sind.

26. Schaltungsanordnung nach einem oder nach mehreren
der vorangegangenen Ansprüche, dadurch gekennzeichnet,
daß die Gleichstromeingangscharakteristik abschnittsweise unterschiedliche Gleichstromwiderstandswerte aufweist.

27. Schaltungsanordnung nach einem oder mehreren der
vorangegangenen Ansprüche, dadurch gekennzeichnet, daß
eine Sprechschaltung mit Rückhördämpfung nach dem Kompensationsprinzip vorgesehen ist.

28. Schaltungsanordnung nach einem oder mehreren der
vorangegangenen Ansprüche, dadurch gekennzeichnet,
daß ein Schleifenstromsensor ( 59 ) und ein Shunt-Regler
( 60 ) in Reihe geschaltet sind, wobei ein Gleichstromausgangssignal des Schleifenstromsensors ( 59 ) dem
Shunt-Regler ( 60 ) zugeführt wird, und daß das Wechselstromsignal des Mikrofons ( 64 ) bzw. des MFV-Senders
des Fernsprechapparates dem Gleichstromausgangssignal
des Schleifensensors ( 59 ) überlagert wird, so daß
durch den Shunt-Regler ( 60) eine Modulation
des durch den Shunt-Regler ( 60 ) fließenden Gleichstroms erfolgt.

29. Schaltungsanordnung nach einem oder mehreren der vorangegangenen Ansprüche, dadurch gekennzeichnet, daß zwischen die Sprechadern ( 49,57 ) ein Spannungsteiler, bestehend aus einer Reihenschaltung zweier Widerstände ( 72,73 ) geschaltet ist, dessen Mittenabgriff mit der Basis eines ersten Transistors ( 74 ) verbunden ist, daß der Kollektor dieses Transistors ( 74 ) an der einen Sprechader ( 57 ) angeschlossen ist, dessen Emitter mit der Basis eines zweiten Transistors ( 75 ) verbunden ist, daß der Emitterwiderstand ( 76 ) mit der anderen Sprechader ( 49 ) verbunden ist und daß die Mikrofon- bzw. MFV-Signale der Basis des ersten Transistors ( 74 ) zugeführt werden.

30. Schaltungsanordnung nach einem oder mehreren der vorangegangenen Ansprüche, dadurch gekennzeichnet, daß an der einen Sprechader ( 57 ) der Emitter eines ersten Transistors ( 74 ) angeschlossen ist, dessen Kollektor mit der Basis eines zweiten Transistors ( 75 ) verbunden ist, daß der Emitterwiderstand ( 76 ) des zweiten Transistors ( 75 ) an der anderen Sprechader ( 49 ) angeschlossen ist, daß mit der Basis des ersten Transistors ( 74 ) der Ausgang eines Regelverstärkers ( 79 ) verbunden ist, dessen invertierender Eingang an dem Mittenabgriff der Reihenschaltung zweier Widerstände ( 80,81 ), die zwischen dem Ausgang des Regelverstärkers ( 79 ) und der anderen Sprechader ( 49 ) liegt, verbunden ist und daß der mit dem Mikrofon- bzw. MFV-Signal beaufschlagte, nicht invertierende Eingang des Regelverstärkers ( 79 ) über einen Widerstand ( 78 ) mit dem Emitter des zweiten Transistors ( 75 ) verbunden ist.

31. Schaltungsanordnung nach Anspruch 30, dadurch gekennzeichnet, daß zwischen dem Widerstand ( 78 ) und dem Emitter des zweiten Transistors ( 75 ) ein Tiefpaß ( 77,91 ) geschaltet ist.

32. Schaltungsanordnung nach einem oder mehreren der vorangegangenen Ansprüche, dadurch gekennzeichnet, daß parallel zu dem zwischen dem Ausgang und dem invertierenden Eingang des Regelverstärkers ( 79 ) liegenden Widerstands ( 81 ) eine Reihenschaltung eines Widerstandes ( 83 ) und einer Zenerdiode ( 84 ) geschaltet ist.

33. Schaltungsanordnung nach Anspruch 32, dadurch gekennzeichnet, daß der zweite Transistor ( 75 ) als Multikollektor- Transistor ausgebildet ist, wobei an jedem Kollektor eine Zusatzeinrichtung anschließbar ist.

34. Schaltungsanordnung nach einem oder nach mehreren der vorangegangenen Ansprüche, dadurch gekennzeichnet, daß die Gleichstromeingangscharakteristik stetig-nichtlinear ist.

35. Schaltungsanordnung nch einem oder nach mehreren der vorangegangenen Ansprüche, dadurch gekennzeichnet, daß während einer solchen Aussteuerungsphase der Endstufe des Lauthör- oder Freisprechverstärkers ( 38, 70 ), in welcher der von dieser Endstufe gezogene Strom denjenigen Strom übersteigt, der von dem Ausgang ( e, 66 ) der Stromverteilerschaltung ( 36, 53 ) geliefert wird, der zusätzlich benötigte Strom aus einem Kondensator ( 42, 71 ) entnommen wird.

FIG.1

0169584

FIG. 2

FIG. 3

0169584

## FIG. 4

## FIG. 5

## FIG.6

0169584

## FIG.7

**FIG. 8**

**FIG. 9**

**FIG. 10**

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| A | EP-A-0 009 127 (SIEMENS)<br><br>* Seite 2, Zeilen 24-37; Seite 3, Zeilen 1-13 *<br><br>--- | 1,3,8,<br>9,13,<br>15,16,<br>22,23,<br>25,34,<br>35 | H 04 M 19/08 |
| A | DE-A-2 043 611 (TELEFONBAU UND NORMALZEIT)<br><br>* Seite 5, Zeilen 4-12 *<br><br>--- | 1,2,4,<br>24,29,<br>30,34 | |
| P,X | DE-A-3 347 765 (TELEFONBAU UND NORMALZEIT)<br>* Seite 4, Zeile 30 - Seite 5, Zeile 28 * | 1,2 | |
| P,A | | 4,5,20<br>,24,26<br>,34 | RECHERCHIERTE SACHGEBIETE (Int. Cl. 4)<br><br>H 04 M |
| P,X | DE-A-3 404 335 (TELEFONBAU UND NORMALZEIT)<br><br>--- | 1-27 | |
| A | DE-A-3 206 564 (LICENTIA PATENT-VERWALTUNGS-GmbH)<br>* Zusammenfassung *<br><br>---       -/- | 6,7,17<br>,25,27 | |

Der vorliegende Recherchenbericht wurde für alle Patentansprüche erstellt.

| Recherchenort | Abschlußdatum der Recherche | Prüfer |
|---|---|---|
| DEN HAAG | 23-10-1985 | VERSLYPE J.P. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82

## EUROPÄISCHER RECHERCHENBERICHT

**Europäisches Patentamt**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 282 198 (T.R.T.) <br><br> * Seite 8, Zeilen 8-40 * <br> --- | 1-3,9-12,16,18,25 | |
| A | WO-A-8 400 270 (WESTERN ELECTRIC) <br> * Zusammenfassung * <br> --- | 1,14,15,19 | |
| A | FR-A-2 465 384 (PHILIPS) <br><br> * Seite 7, Zeile 19 - Seite 8, Zeile 11 * <br> --- | 1,3,12,16,17,22,25,28 | |
| A | FR-A-2 526 183 (MOTOROLA) <br> * Seite 4, Zeile 10 - Seite 6, Zeile 27 * <br> ----- | 30-32 | **RECHERCHIERTE SACHGEBIETE (Int. Cl.4)** |

Der vorliegende Recherchenbericht wurde für alle Patentansprüche erstellt.

| Recherchenort | Abschlußdatum der Recherche | Prüfer |
|---|---|---|
| DEN HAAG | 23-10-1985 | VERSLYPE J.P. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82